# EUROPÄISCHE PATENTSCHRIFT

(11) **EP 3 963 504 B1**
(45) Veröffentlichungstag und Bekanntmachung des Hinweises auf die Patenterteilung: **12.08.2026**
(21) Anmeldenummer: 20720756.4
(22) Anmeldetag: 09.04.2020
(51) Int. Cl.: G06F 18/21, G06T 7/00, G06T 7/246, G06V 10/98, G06V 20/58

(54) **VERFAHREN ZUR ERFASSUNG VON BILDMATERIAL ZUR ÜBERPRÜFUNG VON BILDAUSWERTENDEN SYSTEMEN, VORRICHTUNG UND FAHRZEUG ZUR VERWENDUNG BEI DEM VERFAHREN SOWIE COMPUTERPROGRAMM**
METHOD FOR CAPTURING IMAGE MATERIAL FOR MONITORING IMAGE-ANALYSING SYSTEMS, DEVICE AND VEHICLE FOR USE IN THE METHOD AND COMPUTER PROGRAM
PROCÉDÉ D'ACQUISITION DE MATÉRIAU D'IMAGE POUR CONTRÔLER DES SYSTÈMES D'ÉVALUATION D'IMAGE, DISPOSITIF ET VÉHICULE À UTILISER DANS LE PROCÉDÉ ET PROGRAMME INFORMATIQUE

(30) Priorität: 30.04.2019 DE 102019206147; 15.11.2019 DE 102019217642
(43) Veröffentlichungstag der Anmeldung: 09.03.2022
(73) Patentinhaber: VOLKSWAGEN AKTIENGESELLSCHAFT, 38440 Wolfsburg (DE)
(72) Erfinder: EHMANN, Sebastian, 38302 Wolfenbüttel (DE)
(86) Internationale Anmeldenummer: PCT/EP2020/060208
(87) Internationale Veröffentlichungsnummer: WO 2020/221575

(56) Entgegenhaltungen:
- US-A1- 2019 050 670
- LIU JIANG ET AL: "Rewind to track: Parallelized apprenticeship learning with backward tracklets", 2017 IEEE INTERNATIONAL CONFERENCE ON MULTIMEDIA AND EXPO (ICME), IEEE, 10 July 2017 (2017-07-10), pages 433 - 438, XP033146619, DOI: 10.1109/ICME.2017.8019398

## Beschreibung

Die Erfindung betrifft das technische Gebiet von Fahrerassistenzsystemen bis hin zu autonom fahrenden Fahrzeugen. Die Erfindung betrifft insbesondere ein Verfahren zur Erfassung von Bildmaterial zur Überprüfung von bildauswertenden Systemen. Ebenso betrifft die Erfindung eine Vorrichtung und ein Fahrzeug zur Verwendung bei dem Verfahren sowie ein Computerprogramm.

Zurzeit wird intensiv an Technologien gearbeitet, die später ein autonomes Fahren ermöglichen sollen. Ein erster Ansatz ist dabei die Einführung von verschiedenen Fahrerassistenzsystemen, die dem Fahrer bestimmte Aufgaben abnehmen. Beispiele von Fahrerassistenzsystemen sind ein Totwinkelwarnassistent, ein Notbremsassistent, ein Einparkassistent, ein Abbiegeassistent, ein Spurhalteassistent, ein Geschwindigkeitsregelassistent usw. Eine weitere Stufe der Entwicklung kann darin bestehen, mehrere Assistenzsysteme zusammen zu fassen. Dabei wird der Fahrer nicht komplett von seinen Aufgaben entlastet, sondern es wird dafür Sorge getragen, dass der Fahrer jederzeit die Steuerung des Fahrzeuges übernehmen kann. Der Fahrer nimmt dann außerdem Überwachungsfunktionen wahr.

Für die nahe Zukunft ist deshalb davon auszugehen, dass systemseitig durch den Einsatz neuerer Technologien (Fahrzeug-zu-Fahrzeug-Kommunikation, Einsatz von Datenbanken, Backend-Anbindung, Cloud-Dienste, Server-Einsatz, Fahrzeugsensorik, etc.) umfassende Informationen über Objekte (insb. Fahrzeuge) im sichtbaren und verdeckten/nicht sichtbaren Umfeld des eigenen Fahrzeugs verfügbar sein werden. Im Bereich Fahrzeugsensorik werden insbesondere die folgenden Komponenten genannt, die eine Umfeldbeobachtung ermöglichen: RADAR-Geräte entsprechend Radio Detection and Ranging, LIDAR-Geräte, entsprechend Light Detection and Ranging, hauptsächlich für den Bereich Abstandserfassung/-warnung, und Kameras mit entsprechender Bildverarbeitung für den Bereich der Objekterkennung. Weiterhin werden Ultraschall und Infrarotsensoren genannt.

Diese Daten über die Umwelt können somit als Basis für systemseitige Fahrempfehlungen, Warnungen etc. herangezogen werden. Beispielsweise sind so Anzeigen/Warnungen darüber denkbar, in welche Richtung (möglicherweise in die eigene Trajektorie) ein anderes, umgebendes Fahrzeug abbiegen will. Auch die Verkehrszeichenerkennung wird als Anwendungsfall erwähnt, die für die Bestimmung der rechtlichen Rahmenbedingungen wichtig ist.

Für das autonome Fahren spielt auch die Fahrzeug-zu-Fahrzeug-Kommunikation eine wichtige Rolle. Mittlerweile sind Mobilfunkkommunikationssysteme wie LTE entsprechend Long Term Evolution oder 5G entwickelt worden, die auch die Fahrzeug-zu-Fahrzeug-Kommunikation unterstützen. Als Alternative stehen auf WLAN-Technologie beruhende Systeme für die Fahrzeug-Direktkommunikation zur Verfügung, insbesondere das System nach WLAN p. Der Begriff "autonomes Fahren" wird in der Literatur teilweise unterschiedlich benutzt.

Zur Klärung dieses Begriffs wird deshalb hier noch folgender Einschub präsentiert. Unter autonomem Fahren (manchmal auch automatisches Fahren, automatisiertes Fahren oder pilotiertes Fahren genannt) ist die Fortbewegung von Fahrzeugen, mobilen Robotern und fahrerlosen Transportsystemen zu verstehen, die sich weitgehend autonom verhalten. Es gibt verschiedene Abstufungen des Begriffs autonomes Fahren. Dabei wird auf bestimmten Stufen auch dann von autonomen Fahren gesprochen, wenn noch ein Fahrer im Fahrzeug befindlich ist, der ggfs. nur noch die Überwachung des automatischen Fahrvorgangs übernimmt. In Europa haben die verschiedenen Verkehrsministerien (in Deutschland war die Bundesanstalt für Straßenwesen beteiligt) zusammengearbeitet und die folgenden Autonomiestufen definiert.
- Level 0: "Driver only", der Fahrer fährt selbst, lenkt, gibt Gas, bremst etc.
- Level 1: Bestimmte Assistenzsysteme helfen bei der Fahrzeugbedienung (u.a. ein Abstandsregelsystem - Automatic Cruise Control ACC).
- Level 2: Teilautomatisierung. U.a. automatisches Einparken, Spurhaltefunktion, allgemeine Längsführung, Beschleunigen, Abbremsen etc. werden von den Assistenzsystemen übernommen (u.a. Stauassistent).
- Level 3: Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert, die Führung zu übernehmen. Diese Form der Autonomie ist auf Autobahnen technisch machbar. Der Gesetzgeber arbeitet darauf hin, Level 3-Fahrzeuge zuzulassen. Die gesetzlichen Rahmenbedingungen wurden dafür bereits geschaffen.
- Level 4: Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.
- Level 5: Kein Fahrer erforderlich. Außer dem Festlegen des Ziels und dem Starten des Systems ist kein menschliches Eingreifen erforderlich.

Automatisierte Fahrfunktionen ab Stufe 3 nehmen dem Fahrer die Verantwortung für die Steuerung des Fahrzeugs ab. Vom VDA wurde eine ähnliche Einteilung der verschiedenen Autonomiestufen herausgegeben, die ebenfalls benutzt werden kann.

Aufgrund der derzeitigen Entwicklung hin zu höheren Autonomiestufen, wo aber viele Fahrzeuge nach wie vor noch vom Fahrer gesteuert werden, ist davon auszugehen, dass entsprechende zusätzliche Informationen mittelfristig bereits für manuell geführte Fahrzeuge und nicht erst langfristig für hochautomatisierte Systeme genutzt werden können.

Für die Fahrer-Fahrzeug-Interaktion stellt sich hierbei die Frage, wie diese Informationen so dargestellt werden können, dass ein echter Mehrwert für den menschlichen Fahrer entsteht und er die bereitgestellten Informationen auch schnell, respektive intuitiv, verorten kann. Folgende Lösungen in diesem Bereich sind dabei schon aus dem Stand der Technik bekannt.

Eine Zukunftsvision in der Automobilbranche ist es, die Windschutzscheibe des eigenen Fahrzeugs mit virtuellen Elementen bespielen zu können, um dem Fahrer einige Vorteile zu ermöglichen. Genutzt wird die sogenannte "Augmented Reality"-Technologie (AR) oder "Mixed Reality" (MR)-Technologie. Weniger geläufig ist der entsprechende deutschsprachige Begriff der "erweiterten Realität" bzw. "gemischten Realität". Dabei wird die reale Umgebung mit virtuellen Elementen angereichert. Das hat mehrere Vorteile: Der Blick nach unten, auf andere Displays als der Windschutzscheibe, entfällt, da viele relevante Informationen beim Blick durch die Windschutzscheibe erscheinen. So muss der Fahrer seinen Blick nicht von der Fahrbahn abwenden. Außerdem ist durch die positionsgenaue Verortung der virtuellen Elemente in der realen Umwelt ein geringerer kognitiver Aufwand seitens des Fahrers wahrscheinlich, da keine Interpretation einer Grafik auf einem gesonderten Display erfolgen muss. Hinsichtlich des automatischen Fahrens kann ebenfalls ein Mehrwert erzeugt werden. Diesbezüglich wird auf den Artikel "3D-FRC: Depiction of the future road course in the Head-Up-Display" von C.A. Wiesner, M. Ruf D. Sirim und G. Klinker in 2017 IEEE International Symposium on Mixed and Augmented Reality hingewiesen, in dem diese Vorteile genauer erläutert werden.

Da die technologischen Mittel heutzutage entsprechend begrenzt sind, kann davon ausgegangen werden, dass mittelfristig keine voll bespielbaren Windschutzscheiben in Fahrzeugen anzutreffen sein werden. Zurzeit werden Head-Up Displays in den Fahrzeugen eingesetzt. Diese haben auch den Vorteil, dass das Bild des HUD näher an der realen Umwelt erscheint. Bei diesen Displays handelt es sich eigentlich um Projektionseinheiten, die ein Bild auf die Windschutzscheibe projizieren. Dieses Bild befindet sich jedoch aus der Sicht des Fahrers je nach Bauart des Moduls wenige Meter bis 15 Meter vor dem Fahrzeug.

Das "Bild" setzt sich dabei folgendermaßen zusammen: Es handelt sich dabei weniger um ein virtuelles Display, sondern eher um eine Art "Schlüsselloch" in die virtuelle Welt. Die virtuelle Umgebung wird theoretisch über die reale Welt gelegt und enthält die virtuellen Objekte, die den Fahrer bei der Fahrt unterstützen und informieren. Die begrenzte Anzeigefläche des HUD hat zur Folge, dass davon nur ein Ausschnitt gesehen werden kann. Man schaut also durch die Anzeigefläche des HUD auf den Ausschnitt der virtuellen Welt. Da diese virtuelle Umgebung die reale Umgebung ergänzt, spricht man in diesem Fall auch von einer "Mixed Reality".

Ein großer Vorteil der bisher bekannten "Augmented Reality"-Anzeigen (AR-Anzeigen) besteht darin, die entsprechenden Anzeigen direkt innerhalb bzw. als Teil der Umwelt darzustellen. Relativ naheliegende Beispiele beziehen sich meist auf den Bereich der Navigation. Während klassische Navigationsanzeigen (in herkömmlichen HUD) in der Regel schematische Darstellungen anzeigen (z.B. einen rechtwinklig verlaufenden Pfeil nach rechts als Zeichen dafür, dass bei nächster Gelegenheit rechts abgebogen werden soll, bieten AR-Anzeigen wesentlich effektivere Möglichkeiten. Da die Anzeigen als "Teil der Umwelt" dargestellt werden können, sind äußerst schnelle und intuitive Interpretationen für den Nutzer möglich. Der Fahrer, wie auch eine höhere Stufe der automatischen Fahrfunktion muss sich darauf verlassen können, dass die Objekte zunächst einmal korrekt erfasst werden. Falls daraus Zusatzinformationen abgeleitet werden, sollten diese an der richtigen Stelle im Bild eingeblendet werden.

Deshalb ist es nötig, dass die korrekte Funktion der Bilderfassungssysteme zumindest im Testbetrieb nachgewiesen wird. Dies kann aber auch für den Normalbetrieb vorgesehen werden. Der öffentliche Verkehr ist dabei hochkomplex und es können so viele bewegliche Verkehrsteilnehmer beteiligt sein, dass es zu Verdeckungen kommen kann. Andere Probleme betreffen Einschränkungen in der Sicht durch verschiedene Wetterbedingungen, wie Nebel, Regen, Schnee usw., Gegenlicht, Dunkelheit und andere Faktoren.

Aus der US 2016/0170414 A1 ist ein Fahrzeug-basiertes System zur Verkehrszeichenerkennung bekannt. Dabei werden Umgebungssensoren wie LIDAR-Sensor, RADAR-Sensor und Kamera eingesetzt. Auch die Position des Fahrzeuges wird über GPS erfasst. Die erkannten Verkehrszeichen werden mit ihrer Position nach extern berichtet und dort in einer Datenbank eingetragen.

Aus der US 2017/0069206 A1 ist ein Fahrzeug-basiertes System zur Überprüfung von Verkehrszeichenerkennungen bekannt. Dabei werden ebenfalls Umgebungssensoren wie LIDAR-Sensor, RADAR-Sensor und Kamera eingesetzt. Ebenfalls werden die erkannten Verkehrszeichen mit ihrer Position nach extern berichtet und dort in einer Datenbank eingetragen. Um Fehlerkennungen zu entlarven, werden verschiedene Überprüfungsmaßnahmen vorgeschlagen, darunter manuelle Sichtprüfungen durch Fachpersonal, Sichtprüfungen durch "Crowdsourcing", Computer-gestützte Analyse und statistische Analyse.

Aus der US 2018/0260639 A1 ist ein Fahrzeug-basiertes System und ein Verfahren zur Verkehrszeichenerkennung bekannt. Die erkannten Verkehrszeichen werden mit ihrer Position in einer Bildverarbeitungseinheit abgespeichert.

Aus US 2008/0239078 A1 ist es bekannt, in den Videobildern einer Kamera, die in einem Fahrzeug zur Umfeldbeobachtung eingesetzt wird, erkannte Objekte mit Zusatzinformationen darzustellen, die von anderen Sensoren im Fahrzeug abgeleitet werden.

Aus der US 2018/0012082 A1 ist eine Methode zur Bildanalyse bekannt, wobei die Sequenz von Bildern von einer Kamera, die an einem Fahrzeug montiert ist, aufgenommen wird. Es ist ein Objekterkennungsmodul in dem Bildauswertesystem enthalten. Es wird ein Begrenzungsrahmen definiert, der als Umrandung eines erkannten Objektes zur Hervorhebung dient.

Aus der US 2018/0201227 A1 ist ein Fahrzeugumgebungsüberwachungssystem bekannt, bei dem die Fahrzeugumgebung mit Kamera überwacht wird. Das Fahrzeug umfasst auch eine Anzeigeeinheit zum Anzeigen der Videobilder, die von der Kamera aufgenommen werden. Eine Bildauswerteeinheit ist vorgesehen, die die Bilddaten auf das Vorhandensein von sich bewegenden externen Objekten in der Umgebung überwacht. Weiterhin ist eine Steuerung so programmiert, dass sie einen Bedrohungsbewertungswert basierend auf den Bedingungen in der Nähe des Fahrzeugs ermittelt und Bilddaten auf einen externen Server hochlädt, wenn der Bedrohungsbewertungswert größer als ein erster Schwellenwert ist.

Aus dem Artikel von J. Liu et al.: "Rewind to track: Parallelized apprenticeship learning with backward tracklets", 2017 IEEE International Conference on Multimedia and Expo (ICME), 2017, S. 433-438, ist ein Multiobjekt-Tracker bekannt, der zukünftige Beobachtungen einbezieht, um Offline-Daten zu verarbeiten. Die Verfolgung mehrerer Objekte wird modelliert, indem jedes Objekt als ein Agent betrachtet wird, der einem Markov-Entscheidungsprozess folgt. Durch Zurückspulen der zugrundeliegenden Videosequenz werden dabei rückwärtsgerichtete Tracklets erzeugt.

Die bekannten Lösungen sind mit verschiedenen Nachteilen behaftet. Dies wurde im Rahmen der Erfindung erkannt. Bei den heute bekannten Bilderfassungsverfahren für den Einsatz im Fahrerassistenzbereich besteht das Problem, dass deren korrekte Funktion im laufenden Betrieb nicht oder nur unzureichend überprüft werden. Fehlerkennungen oder sogar Fehlklassifizierungen von Objekten sind daher möglich.

Es besteht also der Bedarf für weitere Verbesserungen bei der Überprüfung von Fahrzeugbasierten Bilderfassungssystemen, insbesondere für Überprüfungsverfahren, die eine nachträgliche Überprüfung bei Fehlerkennungen ermöglichen.

Die Erfindung setzt sich zur Aufgabe, einen solchen Ansatz zu finden. Dabei soll auch der Aufwand für die Archivierung der Bilddaten als Voraussetzung für die nachträgliche Überprüfung gering gehalten werden. Diese Aufgabe wird durch ein Verfahren zur Erfassung von Bildmaterial zur Überprüfung von bildauswertenden Systemen gemäß Anspruch 1, eine Vorrichtung und ein Fahrzeug nach den Ansprüchen 7 und 12 sowie ein Computerprogramm gemäß Anspruch 13 gelöst.

Die abhängigen Ansprüche beinhalten vorteilhafte Weiterbildungen und Verbesserungen der Erfindung entsprechend der nachfolgenden Beschreibung dieser Maßnahmen.

In einer anderen Patentanmeldung der Anmelderin werden Wege aufgezeigt, wie mit Hilfe eines Ringspeichers für aufgenommene Bilder von Umgebungssensoren und die Berücksichtigung von Odometriedaten des Fahrzeuges nur bestimmte Bildausschnitte für eine Datenaufzeichnung / Übertragung an ein Backend berücksichtigt werden können, um die nötige Datenmenge zu reduzieren.

Gemäß einer Ausprägung der Erfindung umfasst ein Verfahren zur Erfassung von Bildmaterial zur Überprüfung von bildauswertenden Systemen die Schritte:
- Aufzeichnen von Bildern in einem Speicher, die von einer Bilderzeugungseinrichtung eines Fahrzeugs erfasst werden;
- Durchführen einer Objekterkennung durch ein bildauswertendes System;
- Bestimmen einer Distanz zwischen dem Fahrzeug und einem Objekt, in der das Objekt erstmalig korrekt erkannt wurde;
- Feststellen, dass die bestimmte Distanz jenseits einer Toleranzgrenze von einer Normerkennungsdistanz für die Objekterkennung abweicht;
- Ermitteln derjenigen Bilder oder Bildausschnitte, die zwischen der bestimmten Distanz und der Normerkennungsdistanz aufgenommen wurden; und
- Archivieren der ermittelten Bilder oder Bildausschnitte.

Das Verfahren bietet den Vorteil, dass ein Bildauswertesystem, das sicherheitsrelevante Daten liefert, im laufenden Betrieb überprüft werden kann, wobei der Speicheraufwand für die Überprüfung gering ist. Besonders vorteilhaft kann das Verfahren zum Testen der Bildauswertesysteme, die sich noch im Entwicklungsstadium befinden, eingesetzt werden. Das Verfahren kann aber auch in Serienprodukten vorteilhaft eingesetzt werden. Das ist vorteilhaft, um nachträgliche Verbesserungen an dem verbauten Bildauswertesystem vornehmen zu können oder um feststellen zu können, ob bei einer Kamera oder einem Sensor eine Dejustage vorliegt, was eine Wartung des Fahrzeuges erforderlich macht.

Wenn die Distanz, bei der das Objekt tatsächlich erkannt wurde, von der Normerkennungsdistanz abweicht, werden erfindungsgemäß diejenigen Bilder oder Bildausschnitte, die von der Normerkennungsdistanz bis zur tatsächlichen Objekterkennungsdistanz aufgenommen wurden, zur genaueren Überprüfung archiviert.

Insbesondere für statische Objekte, wie Verkehrsschilder etc., kann die Lösung vorteilhaft eingesetzt werden. Gerade im Hinblick auf das autonome Fahren wird es aber auch erforderlich, in den aufgezeichneten Bildern bewegte Objekte zu erkennen. Die entsprechenden Bildauswertealgorithmen sind aber noch fehleranfälliger. Um die Algorithmen verbessern zu können, sind bei Fehlerkennungen ebenfalls nachträgliche Überprüfungen erforderlich. Deshalb besteht auch ein weiterer Bedarf für Verbesserungen bei der Überprüfung von Fahrzeugbasierten Bilderfassungssystemen.

Um dies auch für dynamische Objekte durchführen zu können, wird in einer Ausprägung der Erfindung eine Trajektorie für das sich bewegende Objekt berechnet oder erhalten, bei dem die Abweichung erkannt wurde. Zukünftig wird es so sein, dass mit automatischer Fahrfunktion ausgestattete Fahrzeuge selbst eine Trajektorie für die Eigenbewegung des Fahrzeuges berechnen. Sie können dann mit Hilfe von Fahrzeug-Direktkommunikation diese berechnete Trajektorie zu umliegenden Fahrzeugen übertragen. Damit können in dem Beobachterfahrzeug die Positionen geschätzt werden, wo sich das Objekt befunden haben sollte, als es von der Objekterkennung noch nicht erkannt wurde. Durch Rückwärtsrechnung werden dann die Bilder und Bildausschnitte bestimmt, die für die nachträgliche Analyse interessant sind. Die Erfindung sieht noch vor, dass die so bestimmten Bildausschnitte aus den aufgezeichneten Bildern extrahiert werden und nur im nötigen Umfang archiviert werden. Dies geschieht unter Heranziehung der Odometrie- und Positionsdaten des Fahrzeugs, wie auch unter Heranziehung der Trajektorie des relevanten dynamischen Objektes. Das dynamische Objekt ist in der Regel ein anderer Verkehrsteilnehmer. Um die nachträglich bestimmten Bilder oder Bildausschnitte noch abrufen zu können, ist ein Ringspeicher für Bilddaten nötig, dessen Größe (d.h. maximale Speicherdauer) ggf. funktions- und ggf. fahrtgeschwindigkeitsabhängig dimensioniert ist.

Dabei ist es vorteilhaft, wenn mit Hilfe der Trajektorie eine Anzahl von Bildern oder Bildausschnitten bestimmt wird, in denen das sich bewegende Objekt mutmaßlich sichtbar war, obwohl die Objekterkennung das sich bewegende Objekt darin nicht erkennen konnte.

In einer erweiterten Ausführungsform kann vorgesehen werden, dass bereits im Fahrzeug eine erste Analyse der problematischen Bilddaten erfolgt. Dies kann z.B. so erfolgen, dass ermittelt wird, ob eine zwischenzeitliche Verdeckung des Objektes durch andere Objekte die Fehlerkennung erklären kann. Dies kommt im öffentlichen Straßenverkehr vielfältig vor, z.B. wenn Busse oder Lkws Straßenschilder verdecken. In dem Fall wäre die Fehlerkennung erklärbar und es werden ggfs. keine Daten archiviert oder nur ein reduzierter Datensatz (z.B. nur wenige Sekunden vor der ersten erfolgreichen Objekterkennung).

Die Erfindung kann besonders vorteilhaft für den Test von Bildauswertesystemen bei Fahrzeugen eingesetzt werden. Diese sind mittlerweile mit bildgebenden Umgebungserfassungssensoren wie Kamera, LIDAR- oder RADAR-Sensoren ausgestattet. Durch sie werden Verkehrszeichen, vorausfahrende Fahrzeuge und andere Verkehrsteilnehmer, Kreuzungen, Abbiegestellen, Schlaglöcher usw. erfasst. Solche Fahrzeuge sind auch mit Positionserfassungssystemen ausgestattet. Mit der ermittelten Position des Fahrzeuges kann überprüft werden, ob eine Abweichung bei der Bilderkennung vorliegt. Im einfachsten Fall erfasst das Fahrzeug die Position des erkannten Objektes, selbst, wenn es an der Stelle des Objektes vorbeikommt. Damit kann dann die Distanz zwischen Fahrzeug und Objekt errechnet werden. In einer anderen Ausführungsform kann die Position des Objektes aus einer hochgenauen Karte entnommen werden. In einer weiteren Variante kann die Position ausgehend von der Position des Fahrzeuges geschätzt werden.

Für die Ermittlung der Positionsdaten des Fahrzeuges und des Objektes bietet sich Satellitennavigation und / oder Odometrie an. Ein Oberbegriff für solche Satellitennavigationssysteme ist GNSS was für Global Navigation Satellite System steht. Bestehende Satellitennavigationssysteme sind das Global Positioning System (GPS), Galileo, GLONASS (Globalnaja nawigazionnaja sputnikowaja sistema) oder Beidou.

In einer Ausführungsform werden die zu archivierenden Bilder oder Bildausschnitte an eine externe Archivierungsstelle gesendet. Das hat den Vorteil, dass so nur die problematischen Bilder archiviert werden müssen. Die Archivierung in einer externen Stelle hat den Vorteil, dass die Bilder nicht erst im Fahrzeug archiviert werden müssen. Die Auswertung soll sowieso in der externen Stelle durch Experten geschehen, die dann auch in der Lage sind, das Bildauswertesystem zu verbessern.

In einer anderen Variante werden die zu archivierenden Bilder oder Bildausschnitte in einer im Fahrzeug angeordneten Speichereinheit archiviert. Dazu muss der entsprechende Speicher im Fahrzeug vorgesehen werden. Die archivierten Bilder können später von Experten ausgelesen werden. Dies könnte bei einem Werkstattbesuch erfolgen. Eine vorteilhafte andere Variante besteht darin, die im Fahrzeug zwischengespeicherten Bilder dann zur externen Stelle zu übertragen, wenn das Fahrzeug zurück am Wohnort des Fahrzeugbesitzers steht. Moderne Fahrzeuge sind mit WLAN ausgestattet. Wenn dieses nun in das private WLAN-Netzwerk des Fahrzeugbesitzers eingebucht wird, kann die Übertragung der archivierten Bilddaten mit hoher Datenrate erfolgen. Gegenüber der unmittelbaren Übertragung über ein Mobilfunkkommunikationssystem, in das das Fahrzeug während der Fahrt eingebucht ist, hat das den Vorteil, dass weniger Kosten für den Fahrzeugbesitzer anfallen, und dass das Mobilfunknetz weniger belastet wird. Dessen Kapazität wird durch vielfältige andere Anwendungen ausgenutzt.

Alternativ kann vorgesehen werden, dass weitere Bilder oder Bildausschnitte archiviert werden, um die Überprüfungsmöglichkeiten zu erweitern. Dabei ist es vorteilhaft, wenn die Bilder oder Bildausschnitte, die von der Normerkennungsdistanz bis zur Objekterkennungsdistanz aufgenommen wurden, mit hoher Qualität archiviert werden, und die weiteren Bilder oder anderen Bildausschnitte mit einer geringeren Qualität archiviert werden. So kann der Speicheraufwand wie auch der Übertragungsaufwand für die Archivierung weiterer Bilder oder Bildausschnitte gering gehalten werden.

Daneben besteht noch eine vorteilhafte Variante darin, die Größe der zu archivierenden Bildausschnitte und / oder den Aufzeichnungszeitraum der zu archivierenden Bilder / Bildausschnitte in Abhängigkeit von einem oder mehreren der folgenden Umgebungsparameter zu bestimmen:
- Genauigkeit der Positionsbestimmung des Fahrzeuges und / oder Objektes
- Uhrzeit, insbesondere mit Tag / Nacht-Unterscheidung
- Wetterlage
- Verkehrslage
- Fahrbahnbeschaffenheit.

Dies ist immer dann von Vorteil, wenn die Umgebungsbedingungen nicht immer gleich sind. In der Praxis ist es eigentlich immer so, dass die Umgebungsbedingungen ständig wechseln. Wenn immer die gleiche Zahl der Bilder oder Bildausschnitte archiviert wird, könnte es bei wechselnden Umgebungsbedingungen leicht passieren, dass gerade wichtige Szenen verpasst werden und so die Ursachen der Probleme nicht gefunden werden können.

Für eine Vorrichtung zur Verwendung bei dem erfindungsgemäßen Verfahren ist es vorteilhaft, wenn die Vorrichtung eine Bilderzeugungseinrichtung, eine Recheneinrichtung und eine Speichereinrichtung aufweist. Die Speichereinrichtung ist dabei ausgelegt, von der Bilderzeugungseinrichtung gelieferte Bilder aufzuzeichnen. Die Recheneinrichtung ist dabei ausgelegt:
- eine Objekterkennung bei den von der Bilderzeugungseinrichtung gelieferten Bildern durchzuführen;
- eine Distanz zu bestimmen, in der ein Objekt erstmalig korrekt erkannt wurde;
- Festzustellen, dass die bestimmte Distanz jenseits einer Toleranzgrenze von einer Normerkennungsdistanz für die Objekterkennung abweicht;
- diejenigen Bilder oder Bildausschnitte zu ermitteln, die zwischen der bestimmten Distanz und der Normerkennungsdistanz aufgenommen wurden; und
- einen Befehl zum Archivieren der ermittelten Bilder oder Bildausschnitte zu geben.

Weiterhin ist es vorteilhaft, wenn die Recheneinrichtung ausgelegt ist, eine Trajektorie des sich bewegenden Objektes zu berechnen und in Abhängigkeit von der berechneten Trajektorie eine Bestimmung der zu archivierenden Bilder oder Bildausschnitte vorzunehmen. Durch Anwendung der Trajektorie können die zu archivierenden Bilder oder Bildausschnitte besser eingegrenzt werden, wodurch sich der Aufwand für die Archivierung verringert.

In einer besonders vorteilhaften Variante weist die Vorrichtung zusätzlich ein Kommunikationsmodul auf und das Kommunikationsmodul ist ausgelegt, die ermittelten Bilder oder Bildausschnitte zu einer externen Archivierungsstelle zu senden nach Erhalt des Befehls zur Archivierung dieser ermittelten Bilder oder Bildausschnitte. Die externe Archivierungsstelle kann ein Rechenzentrum des Herstellers des Bildauswertesystems oder des Fahrzeuges sein.

Daneben wird noch die Variante vorgeschlagen, wobei die Vorrichtung eine Speichereinrichtung aufweist, und die Speichereinrichtung ausgelegt ist, die ermittelten Bilder oder Bildausschnitte zu speichern nach Erhalt des Befehls zur Archivierung dieser ermittelten Bilder oder Bildausschnitte. Bei dieser Variante findet die Archivierung im Fahrzeug statt, solange bis die Daten ausgelesen werden. Wie oben beschrieben, könnte das Auslesen in einer Werkstatt stattfinden oder die Daten könnten bei Rückkehr über das heimische WLAN-Netzwerk zu der externen Archivierungsstelle übertragen werden.

Für die fahrzeugseitige Zwischenspeicherung der Daten ist es vorteilhaft, wenn die Speichereinrichtung als Ringspeicher ausgebildet ist, bei dem bei Speicherüberlauf die ältesten zuvor gespeicherten Bilder oder Bildausschnitte von den neuen Bildern oder Bildausschnitten überschrieben werden.

Als Bilderzeugungseinrichtung kann in vorteilhafter Weise eine Videokamera oder ein LIDAR- oder ein RADAR-Sensor eingesetzt werden. Für die Schnittstelle für die drahtlose Kommunikation ist es vorteilhaft, eine Schnittstelle nach wenigstens einem der Kommunikationssysteme WLAN entsprechend eines Standards der IEEE 802.11 Standard-Familie oder einem LTE oder 5G Mobilfunkkommunikationssystem entsprechend eines 3GPP Standards einzusetzen.

Für ein Fahrzeug zur Verwendung bei dem Verfahren ist es vorteilhaft, wenn das Fahrzeug mit einer Vorrichtung ausgestattet ist, die der vorgeschlagenen Vorrichtung entspricht.

Für ein Computerprogramm, das in einer Recheneinrichtung zur Abarbeitung kommt, um die Schritte zur Erfassung von Bildmaterial nach dem erfindungsgemäßen Verfahren durchzuführen, gelten die entsprechenden Vorteile wie zu dem erfindungsgemäßen Verfahren beschrieben.

Ausführungsbeispiele der Erfindung sind in den Zeichnungen dargestellt und werden nachfolgend anhand der Figuren näher erläutert.

Es zeigen:
- Fig. 1: das typische Cockpit eines Fahrzeuges;
- Fig. 2: eine Prinzip-Darstellung der verschiedenen Kommunikations-Möglichkeiten, die in einem Fahrzeug für die externe Kommunikation vorgesehen werden;
- Fig. 3: ein Blockschaltbild der Bordelektronik des Fahrzeuges;
- Fig. 4: eine erste Darstellung einer ersten Fahrsituation zur Erläuterung der Problematik bei der Überprüfung der Funktion eines Bildauswertesystems des Fahrzeuges;
- Fig. 5: eine zweite Darstellung der ersten Fahrsituation, wobei die zweite Darstellung die Fahrsituation zu einem früheren Zeitpunkt zeigt; und
- Fig. 6: ein Flussdiagramm für ein Programm zur Erfassung von Bildmaterial für die Überprüfung der Funktion des Bildauswertesystems bei der ersten Fahrsituation;
- Fig. 7: eine erste Darstellung einer zweiten Fahrsituation zur Erläuterung der Problematik bei der Überprüfung der Funktion eines Bildauswertesystems des Fahrzeuges;
- Fig. 8: eine zweite Darstellung der zweiten Fahrsituation, wobei die zweite Darstellung die zweite Fahrsituation zu einem früheren Zeitpunkt zeigt; und
- Fig. 9: ein Flussdiagramm für ein Programm zur Erfassung von Bildmaterial für die Überprüfung der Funktion des Bildauswertesystems bei der zweiten Fahrsituation;
- Fig. 10: eine Darstellung der Variation der Bildqualität zur Archivierung von Bildmaterial in Abhängigkeit von den Umgebungsbedingungen; und
- Fig. 11: eine Darstellung der Variation der Aufzeichnungsdauer zur Archivierung von Bildmaterial in Abhängigkeit von den Umgebungsbedingungen.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

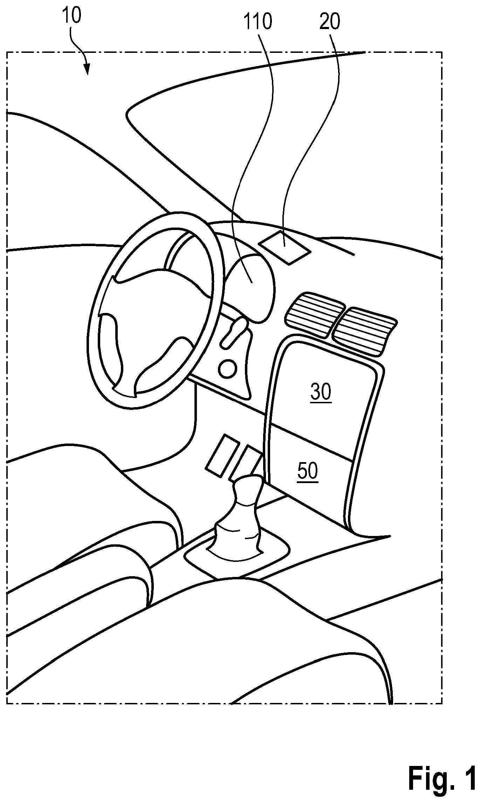

Fig. 1 zeigt das typische Cockpit eines Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Schienenfahrzeuge usw. Der Einsatz der Erfindung wäre allgemein bei Landfahrzeugen, Schienenfahrzeugen, Wasserfahrzeugen und Luftfahrzeugen möglich.

In dem Cockpit sind zwei Anzeigeeinheiten eines Infotainmentsystems dargestellt. Es handelt sich um einen berührungsempfindlichen Bildschirm 30, der in der Mittelkonsole angebracht ist und das Kombiinstrument 110, welches im Armaturenbrett angebracht ist. Bei der Fahrt liegt die Mittelkonsole nicht im Sichtfeld des Fahrers. Deshalb werden die Zusatzinformationen während der Fahrt nicht auf der Anzeigeeinheit 30 eingeblendet.

Der berührungsempfindliche Bildschirm 30 dient dabei insbesondere zur Bedienung von Funktionen des Fahrzeugs 10. Beispielsweise können darüber ein Radio, ein Navigationssystem, eine Wiedergabe von gespeicherten Musikstücken und / oder eine Klimaanlage, andere elektronische Einrichtungen oder andere Komfortfunktionen oder Applikationen des Fahrzeugs 10 gesteuert werden. Zusammengefasst wird häufig von einem "Infotainmentsystem" gesprochen. Ein Infotainmentsystem bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainmentsystems wird hauptsächlich der berührungsempfindliche Bildschirm 30 ("Touchscreen") benutzt, wobei dieser Bildschirm 30 insbesondere von einem Fahrer des Fahrzeugs 10, aber auch von einem Beifahrer des Fahrzeugs 10 gut eingesehen und bedient werden kann. Unterhalb des Bildschirms 30 können zudem mechanische Bedienelemente, beispielsweise Tasten, Drehregler oder Kombinationen hiervon, wie beispielsweise Drückdrehregler, in einer Eingabeeinheit 50 angeordnet sein. Typischerweise ist auch eine Lenkradbedienung von Teilen des Infotainmentsystems möglich. Diese Einheit ist nicht separat dargestellt, sondern wird als Teil der Eingabeeinheit 50 betrachtet.

Fig. 1 zeigt auch ein Head-Up Display 20. Das Head-Up Display 20 ist im Fahrzeug 10 aus Sicht des Fahrers hinter dem Kombiinstrument 110 im Armaturenbrettbereich angebracht. Es handelt sich um eine Bildprojektionseinheit. Durch Projektion auf die Windschutzscheibe werden Zusatzinformationen in das Sichtfeld des Fahrers eingeblendet. Diese Zusatzinformationen erscheinen so, als seien sie auf eine Projektionsfläche 21 im Abstand von 7 - 15 m vor dem Fahrzeug 10 projiziert. Durch diese Projektionsfläche 21 hindurch bleibt aber die reale Welt sichtbar. Mit den eingeblendeten Zusatzinformationen wird quasi eine virtuelle Umgebung erzeugt. Die virtuelle Umgebung wird theoretisch über die reale Welt gelegt und enthält die virtuellen Objekte, die den Fahrer bei der Fahrt unterstützen und informieren. Es wird aber nur auf einen Teil der Windschutzscheibe projiziert, so dass die Zusatzinformationen nicht beliebig im Sichtfeld des Fahrers angeordnet werden können. Diese Darstellungsart ist auch unter dem Begriff "augmented reality" bekannt.

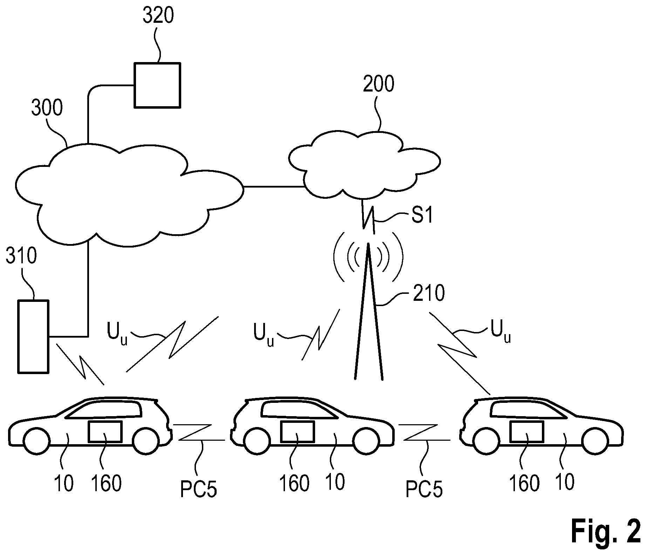

Fig. 2 zeigt eine Systemarchitektur für die Fahrzeugkommunikation mittels Mobilfunk. Die Fahrzeuge 10 sind mit einem On-Board-Kommunikationsmodul 160 mit entsprechender Antenneneinheit ausgestattet, so dass es an den verschiedenen Arten der Fahrzeugkommunikation V2V und V2X teilnehmen kann. Fig. 1 zeigt, dass das Fahrzeug 10 mit der Mobilfunk-Basisstation 210 eines Mobilfunk-Anbieters kommunizieren kann.

Eine solche Basisstation 210 kann eine eNodeB-Basisstation eines LTE-Mobilfunkanbieters (Long Term Evolution) sein. Die Basisstation 210 und die entsprechende Ausrüstung ist Teil eines Mobilfunk-Kommunikationsnetzwerks mit einer Vielzahl von Mobilfunkzellen, wobei jede Zelle von einer Basisstation 210 bedient wird.

Die Basisstation 210 ist nahe einer Hauptstraße positioniert, auf der die Fahrzeuge 10 fahren. In der Terminologie von LTE entspricht ein mobiles Endgerät einer Benutzerausrüstung UE, die es einem Benutzer ermöglicht, auf Netzwerkdienste zuzugreifen, wobei er sich über die Funkschnittstelle mit dem UTRAN oder dem Evolved-UTRAN verbindet. Typischerweise entspricht eine solche Benutzerausrüstung einem Smartphone. Solche mobilen Endgeräte werden von den Passagieren in den Fahrzeugen 10 verwendet. Zusätzlich sind die Fahrzeuge 10 jeweils mit einem On-Board-Kommunikationsmodul 160 ausgestattet. Dieses On-Board-Kommunikationsmodul 160 entspricht einem LTE-Kommunikationsmodul, mit dem das Fahrzeug 10 mobile Daten empfangen kann (Downlink) und solche Daten in Aufwärtsrichtung senden kann (Uplink). Dieses On-Board-Kommunikationsmodul 160 kann ferner mit einem WLAN p-Modul ausgestattet sein, um an einem Ad-hoc-V2X-Kommunikationsmodus teilnehmen zu können.

V2V- und V2X-Kommunikation wird aber auch durch die neue 5. Generation von Mobilfunksystemen unterstützt. Dort wird die entsprechende Funkschnittstelle als PC5 Schnittstelle bezeichnet. In Bezug auf das LTE-Mobilfunk-Kommunikationssystem besteht das Evolved UMTS Terrestrial Radio Access-Netzwerk E-UTRAN von LTE aus mehreren eNodeBs, die die E-UTRA-Benutzerebene (PDCP / RLC / MAC / PHY) und die Steuerebene (RRC) bereitstellen. Die eNodeBs sind mittels der sogenannten X2-Schnittstelle miteinander verbunden. Die eNodeBs sind auch über die sogenannte S1-Schnittstelle mit dem EPC (Evolved Packet Core) 200 verbunden.

Aus dieser allgemeinen Architektur zeigt Fig. 2, dass die Basisstation 210 über die S1-Schnittstelle mit dem EPC 200 verbunden ist und der EPC 200 mit dem Internet 300 verbunden ist. Ein Backend-Server 320, an den die Fahrzeuge 10 Nachrichten senden können und von diesem empfangen können, ist ebenfalls mit dem Internet 300 verbunden. In dem hier zu betrachtenden Fall kann der Backend-Server 320 in einem Rechenzentrum des Fahrzeugherstellers untergebracht sein. Schließlich ist auch eine Straßeninfrastrukturstation 310 gezeigt. Diese kann beispielsweise durch eine straßenseitige Einheit, die im Fachjargon oft als Road Side Unit RSU 310 bezeichnet wird, veranschaulicht werden. Zur Vereinfachung der Implementierung wird davon ausgegangen, dass allen Komponenten eine Internetadresse zugewiesen wurde, typischerweise in Form einer IPv6-Adresse, so dass die Pakete, die Nachrichten zwischen den Komponenten transportieren, entsprechend geroutet werden können. Die erwähnten verschiedenen Schnittstellen sind standardisiert. Es wird diesbezüglich auf die entsprechenden LTE-Spezifikationen verwiesen, die veröffentlicht sind.

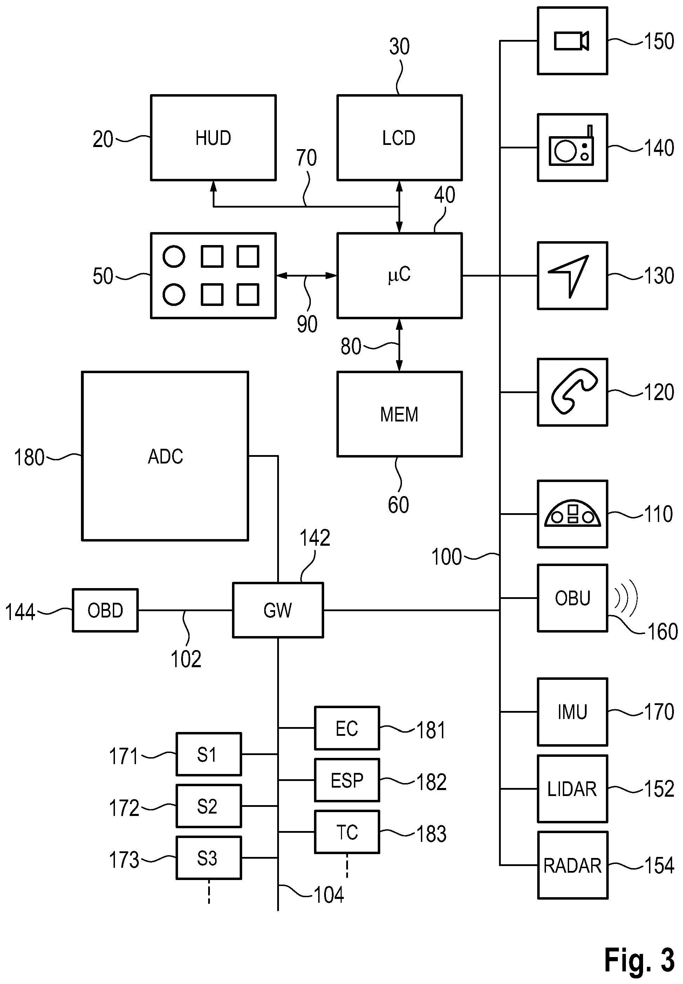

Fig. 3 zeigt schematisch ein Blockschaltbild der Bordelektronik 200, zu der auch das Infotainmentsystem des Fahrzeuges 10 gehört. Zur Bedienung des Infotainmentsystems dient die berührungsempfindliche Anzeigeeinheit 30, eine Recheneinrichtung 40, eine Eingabeeinheit 50 und ein Speicher 60. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer. Sie kann als LCD-Touchscreen-Display ausgebildet sein.

Die Anzeigeeinheit 30 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und / oder Symbolverzeichnis hinterlegt mit den Piktogrammen und / oder Symbolen für die möglichen Einblendungen von Zusatzinformationen.

Die weiteren Teile des Infotainmentsystems Kamera 150, Radio 140, Navigationsgerät 130, Telefon 120 und Kombiinstrument 110 sind über den Datenbus 100 mit der Vorrichtung zur Bedienung des Infotainmentsystems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie BroadR-Reach in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). An den Datenbus 100 ist auch eine Fahrzeug-Messeinheit 170 angeschlossen. Diese Fahrzeug-Messeinheit 170 dient der Erfassung der Bewegung des Fahrzeuges, insbesondere der Erfassung der Beschleunigungen des Fahrzeuges. Sie kann als konventionelle IMU-Einheit, entsprechend Inertial Measurement Unit, ausgebildet sein. In einer IMU-Unit finden sich typischerweise Beschleunigungssensoren und Drehratensensoren wie ein Laser-Gyroskop oder ein Magnetometer-Gyroskop. Die Fahrzeug-Messeinheit 170 kann als Teil der Odometrie des Fahrzeuges 10 angesehen werden. Dazu gehören aber auch die Raddrehzahlsensoren.

Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbildern/s entspricht. Alternativ kann eine Spezialkamera eingesetzt werden, die mehr Bilder/s aufnimmt, um die Genauigkeit der Objekterkennung bei sich schneller bewegenden Objekten zu erhöhen, oder die Licht in einem anderen als dem sichtbaren Spektrum aufnimmt. Es können mehrere Kameras zur Umfeldbeobachtung eingesetzt werden. Daneben werden auch die schon erwähnten RADAR- oder LIDAR-Systeme 152 und 154 ergänzend oder alternativ eingesetzt werden, um die Umfeldbeobachtung durchzuführen oder zu erweitern. Für die drahtlose Kommunikation nach innen und außen ist das Fahrzeug 10 mit dem Kommunikationsmodul 160 ausgestattet, wie bereits erwähnt.

Die Kamera 150 wird hauptsächlich zur Objekterkennung eingesetzt. Typische Objekte, die erkannt werden sollen, sind Verkehrszeichen, vorausfahrende / umgebende / parkende Fahrzeuge und andere Verkehrsteilnehmer, Kreuzungen, Abbiegestellen, Schlaglöcher usw. Wenn ein Objekt mit einem Bedeutungspotenzial erkannt worden ist, kann über das Infotainmentsystem eine Information ausgegeben werden. Typischerweise werden z.B. Symbole für die erkannten Verkehrszeichen eingeblendet. Es kann sich auch um eine Warnmeldung handeln, wenn von dem Objekt eine Gefahr ausgeht. Über das HUD 20 werden die Informationen direkt in das Sichtfeld des Fahrers projiziert. Als Beispiel für ein Objekt, von dem eine Gefahr ausgeht, wird der Fall genannt, dass die Bildauswertung der von der Kamera 150 gelieferten Bilder ergeben hat, dass sich von rechts ein Fahrzeug einer Kreuzung nähert, auf die sich das Fahrzeug selber zubewegt. Die Bildauswertung findet in der Recheneinheit 40 statt. Dazu können bekannte Algorithmen zur Objekterkennung eingesetzt werden. Im Ergebnis wird ein Gefahrensymbol an der Position des Fahrzeuges eingeblendet. Die Einblendung sollte dabei so erfolgen, dass die Einblendung des Gefahrensymbols das Fahrzeug nicht verdeckt, weil sonst der Fahrer nicht genau erkennen kann, worin die Gefahr besteht.

Die Objekterkennungsalgorithmen werden von der Recheneinheit 40 abgearbeitet. Es hängt von der Leistungsfähigkeit dieser Recheneinheit ab, wie viele Bilder pro Sekunde analysiert werden können. Üblicherweise befindet sich eine Funktion für automatisiertes Fahren in unterschiedliche Phasen: In der Perzeptionsphase werden Daten verschiedener Umgebungssensoren verarbeitet und auf einer leistungsstarken Plattform zusammengeführt. Zudem muss das Fahrzeug auf einer hochgenauen digitalen Karte basierend auf seiner GNSS-Position geortet werden. Die Daten werden zum Generieren eines dreidimensionalen Umgebungsmodells genutzt und stellen Informationen zu dynamischen und statischen Objekten sowie zu Freiflächen rund um das Fahrzeug bereit (Objektliste). Unter bestimmten Bedingungen reicht die Genauigkeit der GNSS-Position nicht aus. Deshalb werden auch die Odometriedaten im Fahrzeug herangezogen, um die Genauigkeit der Positionsbestimmung zu verbessern.

Mit der Bezugszahl 181 ist ein Motorsteuergerät bezeichnet. Die Bezugszahl 182 entspricht einem ESP-Steuergerät und die Bezugszahl 183 bezeichnet ein Getriebe-Steuergerät. Weitere Steuergeräte, wie ein zusätzliches Fahrdynamik-Steuergerät (für Fahrzeuge mit elektrisch verstellbaren Dämpfern), Airbag-Steuergerät usw., können im Fahrzeug vorhanden sein. Die Vernetzung solcher Steuergeräte, die alle der Kategorie des Antriebsstrangs zugerechnet werden, geschieht typischerweise mit dem CAN-Bussystem (Controller Area Network) 104, welches als ISO Norm standardisiert ist, meist als ISO 11898-1. Für verschiedene Sensoren 171 bis 173 im Kraftfahrzeug, die nicht mehr nur an einzelne Steuergeräte angeschlossen werden sollen, ist es ebenfalls vorgesehen, dass sie an das Bussystem 104 angeschlossen werden und deren Sensordaten über den Bus zu den einzelnen Steuergeräten übertragen werden. Beispiele von Sensoren im Kraftfahrzeug sind Raddrehzahlsensoren, Lenkwinkelsensoren, Beschleunigungssensoren, Drehratensensoren, Reifendrucksensoren, Abstandssensoren, Klopfsensoren, Luftgütesensoren usw. Insbesondere die Raddrehzahlsensoren und die Lenkwinkelsensoren sind der Odometrie des Fahrzeuges zuzurechnen. Die Beschleunigungssensoren und Drehratensensoren können auch direkt an die Fahrzeug-Messeinheit 170 angeschlossen sein.

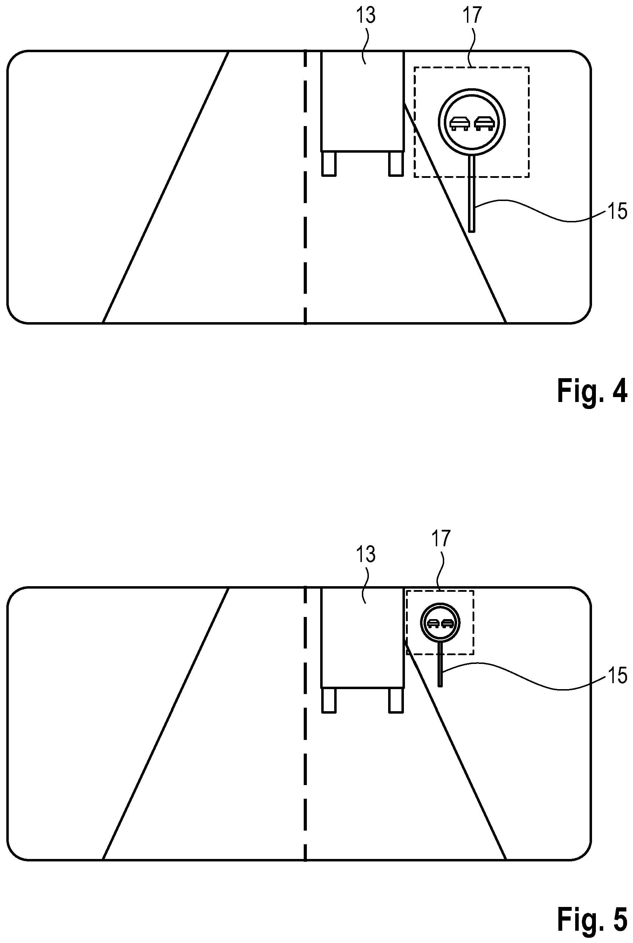

Die Figuren 4 und 5 zeigen die prinzipielle Funktionsweise eines Bildauswertesystems in einer ersten Ausprägung, wie es in Fahrzeugen eingesetzt wird. Gezeigt ist das Kamerabild, das von der Frontkamera 150 des Fahrzeuges 10 aufgenommen wird. Es wurde das Beispiel der Verkehrszeichenerkennung gewählt. Fig. 4 zeigt das Kamerabild aus naher Entfernung zu dem Verkehrszeichen 15. Fig. 5 zeigt das Kamerabild aus weiterer Entfernung zu dem Verkehrszeichen 15. Es handelt sich um ein Verkehrszeichen 15, mit dem ein absolutes Überholverbot angezeigt wird. Für die Auslegung des Verkehrszeichenerkennungssystem ist vorgeschrieben, dass bei Annäherung des Fahrzeuges 10 an das Verkehrszeichen 15 unter Normbedingungen eine Erkennung in einer Normerkennungsdistanz von 80 m Abstand zum Verkehrszeichen erfolgen sollte. Fig. 4 zeigt das Kamerabild für die Situation, in der die Annäherung bis zu einer Entfernung von 20 m stattgefunden hat. In Fig. 5 ist die Situation dargestellt, wo das Fahrzeug 10 noch 40 m von dem Verkehrszeichen 15 entfernt ist. Es ergibt sich bei der Bildauswertung, dass die Verkehrszeichenerkennung erst in der Distanz von 40 m erfolgte. Die Überprüfungsfunktion des Bildauswertesystems stellt fest, dass die Verkehrszeichenerkennung unter den gegebenen Bedingungen zu spät erfolgte. Die Überprüfungsfunktion führt dann einen Test durch, mit dem eine Vorauswertung der aufgenommenen Bilder stattfindet. Dabei ergibt sich wie dargestellt, dass ein vorausfahrender Lkw 13 im Kamerabild zu sehen ist. Wie in Fig. 5 zu sehen ist, ist das Verkehrszeichen 15 unmittelbar rechts neben dem Lkw 13 zu sehen. Daraus folgert die Überprüfungsfunktion, dass das Verkehrszeichen 15 in weiterer Distanz von dem Lkw verdeckt wurde. Aus dem Grund werden die aufgenommenen Bilder in der Entfernung von 80 m bis zur tatsächlichen Verkehrszeichenerkennung in der Distanz von 40 m mit geringerer Qualität archiviert.

Die Fig. 4 und 5 dienen auch zur Erklärung einer weiteren Fehlerkennungssituation. Dabei erfolgte im Abstand von 40 m zunächst eine Erkennung des Verkehrszeichens 15 für ein eingeschränktes Überholverbot, das für Lkws gilt. Im Abstand von 20 m zum Verkehrszeichen 15 wurde dann erst erkannt, dass es sich um das Verkehrszeichen 15 für ein absolutes Überholverbot handelt. In dieser Situation reagiert die Überprüfungsfunktion wie folgt: Der durch Hinterlegung markierte Bereich 17 des aufgenommenen Kamerabildes wird bei den zu archivierenden Bildern mit hoher Qualität archiviert. Die restlichen Teile der Bilder werden mit geringerer Qualität aufgezeichnet. Dies gilt für alle Bilder, die ab dem Abstand von 40 m bis zu dem Abstand von 20 m aufgenommen wurden.

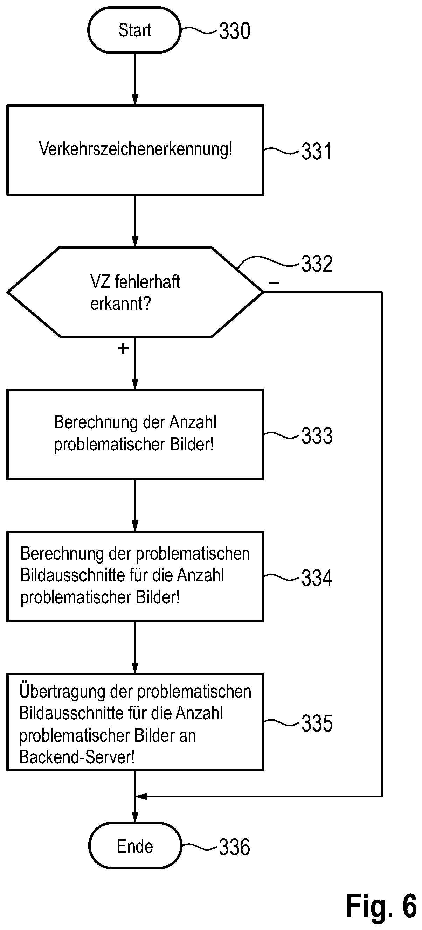

Fig. 6 zeigt ein Flussdiagramm für ein Programm, mit dem die Überprüfungsfunktion realisiert wird. Diese Variante des Programms ist für die zweite erläuterte Variante gedacht, bei der zunächst eine Fehlerkennung des Verkehrszeichen erfolgte, und erst bei weiterer Annäherung eine korrekte Erkennung des Verkehrszeichens erfolgte. Mit der Bezugszahl 330 ist der Programmstart bezeichnet. Im Programmschritt 331 erfolgt die Abarbeitung des Algorithmus zur Verkehrszeichenerkennung. Es handelt sich um einen Objekterkennungsalgorithmus, der eine Mustererkennung auf Basis von in einer Tabelle abgespeicherten Mustern vornimmt. Alle gültigen Verkehrszeichen sind ja bekannt und deren Muster können in einer Tabelle abgespeichert werden. Typischerweise wird die Mustererkennung durch eine Faltungsoperation verbessert, bei der die aufgenommenen Bilder mit den bekannten Mustern gefaltet werden. Solche Algorithmen sind dem Fachmann bekannt und stehen zur Verfügung. Wenn auf diese Weise ein Verkehrszeichen erkannt wurde, wird auch die Erkennungsdistanz zum Verkehrszeichen ermittelt und abgespeichert.

Im Programmschritt 332 wird überprüft, ob die Verkehrszeichenerkennung normgerecht war oder nicht. Bei dem betrachteten Fall war die Verkehrszeichenerkennung aus zwei Gründen fehlerhaft. Zunächst erfolgte die Erkennung nicht in der Normerkennungsdistanz von 80 m Abstand zum Verkehrszeichen 15. Des Weiteren erfolgte zunächst eine Erkennung eines eingeschränkten Überholverbots, was bei weiterer Annäherung revidiert wurde zu einem absoluten Überholverbot. Wenn bei diesem Programmschritt eine normgerechte Verkehrszeichenerkennung festgestellt wird, brauchen keine Bilder zur Kontrolle archiviert zu werden und das Programm endet im Schritt 336. Im betrachteten Fall wurde aber eine fehlerhafte Verkehrszeichenerkennung erkannt. Dann wird das Programm mit Programmschritt 333 fortgesetzt. In Programmschritt 333 findet eine Berechnung der Anzahl problematischer Bilder statt. Weil eine Abweichung von der Normerkennungsdistanz vorliegt, kann die Berechnung wie folgt erfolgen. Die erste Erkennung erfolgte bei 40 m Entfernung. Die korrekte Erkennung erfolgte erst bei 20 m Entfernung. Es interessieren daher die Bilder ab der Normerkennungsdistanz von 80 m bis zur Entfernung von 20 m.

Im Programmschritt 333 wird zusätzlich überprüft, ob die Fehlerkennung erklärbar ist. Dabei wird durch Bildanalyse festgestellt, dass ein Lkw 13 vorausfährt und dieser vermutlich das Verkehrszeichen 15 bis zur ersten Erkennung verdeckt hat. Somit wird gefolgert, dass die Bilder in dem Entfernungsbereich von 80 m bis 40 m weniger wichtig sind für die nachträgliche Überprüfung. Diese Bilder werden deshalb mit geringerer Qualität abgespeichert.

Im Programmschritt 334 erfolgt eine Berechnung der problematischen Bildausschnitte. In dem Fall der Verkehrszeichenerkennung wird der in den Fig. 4 und 5 markierte Bildausschnitt um das Verkehrszeichen 15 herum als relevant ausgewählt. Dieser Bildausschnitt wird deshalb im Bereich von einer Distanz von 40 m bis 20 m mit hoher Bildqualität ausgewählt.

Im Programmschritt 335 erfolgt dann die Übertragung der problematischen Bilder und der problematischen Bildausschnitte von dem Speicher 60 zu dem Kommunikationsmodul 160 und das Kommunikationsmodul 160 sendet diese Bilddaten über Mobilfunk zum dem Backend-Server 320. Dort werden sie archiviert. Die archivierten Bilder werden später in dem Rechenzentrum von Experten ausgewertet oder maschinell mit künstlicher Intelligenz. Die Überprüfung hat den Zweck, mögliche Probleme des Bildauswertungssystems zu erkennen. Die Ergebnisse der Überprüfungen können zur Verbesserung der Auswertealgorithmen herangezogen werden. Im Idealfall kann der verbesserte Auswertealgorithmus per OTA Download (Over the Air) an das Fahrzeug 10 zurück übertragen werden und dort installiert werden. Es kann sich aber auch ergeben, dass mit der Überprüfung ein systematischer Fehler festgestellt wird, der auf einer Fehljustierung der Kamera 150 beruht. In dem Fall könnte eine Nachricht an das Fahrzeug 10 gesendet werden, um den Fahrer zu informieren, dass er die Werkstatt aufsuchen soll. Das Programm endet im Programmschritt 336.

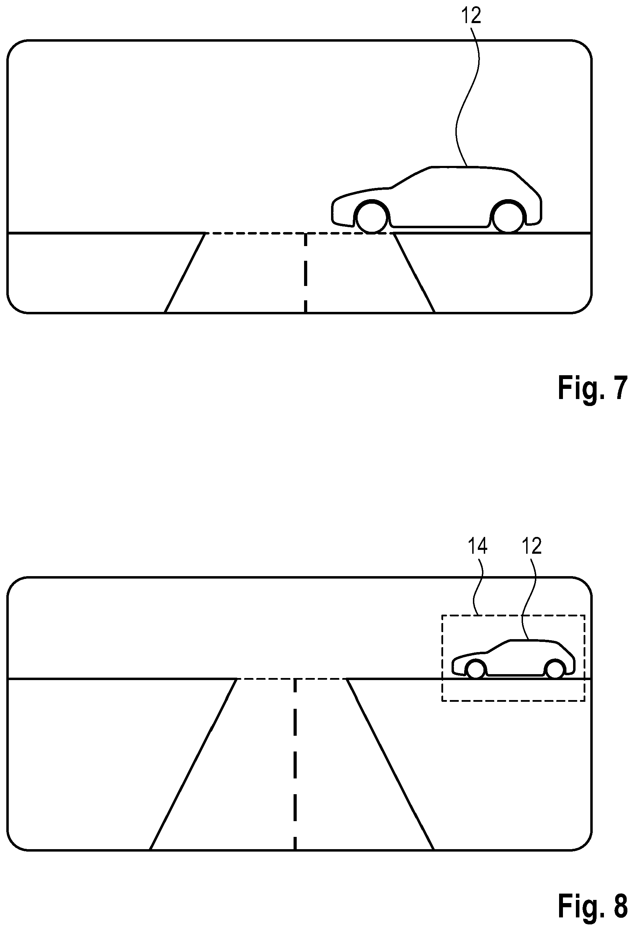

In Fig. 7 ist eine Situation dargestellt, bei der sich ein Fahrzeug auf eine Vorfahrtstraße zubewegt. Erst kurz vor dem Einbiegen in die Vorfahrtsstraße wird durch Auswertung der Kamerabilder und / oder Auswertung der Daten von Radar- und Lidar-Sensoren 154, 152 ein kreuzendes, vorfahrtberechtigtes Fahrzeug 12 erkannt. Das autonome Fahrzeug 10 muss deshalb stark abbremsen. Für die Fahrzeuginsassen entsteht eine unangenehme Situation durch das Erfordernis der besonders starken Bremsung. Gerade für autonom fahrende Fahrzeuge sollten solche Bremsvorgänge vermieden werden, um den Fahrzeuginsassen ein sicheres Gefühl zu vermitteln. Zumindest in der Testphase wird dieser Vorfall von der Bordelektronik als nicht wünschenswert klassifiziert. Das gleiche kann auch im Normalbetrieb, also nach der Testphase, geschehen. Dafür gibt es mehrere Möglichkeiten. Eine erste Möglichkeit besteht darin, dass wenn ein festgelegter Beschleunigungswert überschritten wird, diese Klassifizierung erfolgt. Eine andere Möglichkeit besteht darin, die Klassifizierung vorzunehmen, wenn eine negative Äußerung der Insassen oder des Fahrers beobachtet wird seitens der Fahrer-/Insassenzustandserkennung. Eine weitere Möglichkeit besteht darin, die Klassifizierung vorzunehmen, wenn eine festgelegte Mindestdistanz bis zur Objekterkennung (in dem Fall das sich von rechts nähernde Fahrzeug) unterschritten wurde.

Um die Datenmenge der abzuspeichernden Bilddaten zu reduzieren, sollen nur die Bildausschnitte aus dem Ringpuffer abgespeichert / übertragen werden, in denen sich das Objekt befunden haben kann.

Die Fig. 8 zeigt ein Kamerabild für die gleiche Fahrsituation wie in Fig. 7 zu einem früheren Zeitpunkt. Das sich von rechts nähernde Fahrzeug 12 ist noch weiter entfernt von der Kreuzungsstelle. Fig. 8 zeigt sogar ein Kamerabild zu einem Zeitpunkt, an dem das Fahrzeug 12 von der Objekterkennung noch gar nicht als sich näherndes Fahrzeug erkannt wurde. Dies kann verschiedene Ursachen haben. Das Fahrzeug ist noch zu weit entfernt und der Objekterkennungsalgorithmus konnte mit der vorhandenen Bildinformation das Fahrzeug noch nicht erkennen. Das Fahrzeug 12 ist durch andere Objekte (z.B. durch Bäume oder Sträucher) verdeckt.

Die Ursache, warum das sich nähernde Fahrzeug 12 so spät erkannt wurde, soll durch nachträgliche Analyse festgestellt werden. Es werden dafür die aufgezeichneten Kamerabilder und ggfs. die aufgezeichneten Bilder der anderen bildgebenden Sensoren bestimmt, die für die nachträgliche Analyse archiviert werden sollen. Die zu archivierende Datenmenge soll dabei möglichst reduziert werden.

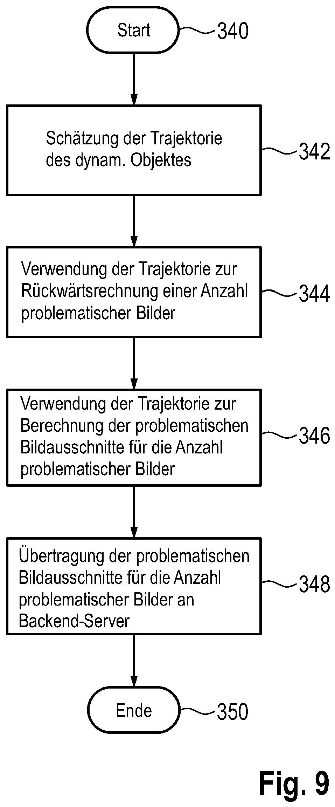

Wie dieses geschieht, wird nachfolgend mit Hilfe der Fig. 9 erläutert. Fig. 9 zeigt ein Flussdiagramm für ein Programm, mit dem die Überprüfungsfunktion bei der zweiten Ausprägung der Erfindung realisiert wird. Mit der Bezugszahl 340 ist der Programmstart bezeichnet. Das Programm wird immer dann gestartet, wenn eine Gefahrensituation erkannt wurde, bei der ein dynamisches Objekt zu spät erkannt wurde. Im Programmschritt 342 erfolgt eine Schätzung der Trajektorie für das zu spät erkannte dynamische Objekt. Dies erfolgt folgendermaßen: Zum Zeitpunkt der erfolgten Objekterkennung wird aus mehreren aufeinanderfolgenden Videobildern unter Heranziehung der verschiedenen Sensordaten des Beobachterfahrzeuges 10 die aktuelle Geschwindigkeit und Beschleunigung des erkannten Objekts bestimmt. Hiermit und ggf. unter Hinzunahme der aus der Karte des Navigationssystems 130 bekannten Streckengeometrie wird eine Trajektorie des erkannten Objekts geschätzt. In Verbindung mit der Eigenbewegungsschätzung des Fahrzeugs kann so in den aufgezeichneten Bilddaten für Zeitpunkte in der Vergangenheit ein Bildausschnitt 14 bestimmt werden, innerhalb dessen sich das (zu diesem Zeitpunkt noch nicht erkannte) Objekt befunden haben müsste. Dieser Bildausschnitt 14 wird auch als Boundingbox bezeichnet. Dabei ist davon auszugehen, dass die Boundingbox zu früheren Zeitpunkten größer sein wird, als zu Zeitpunkten, die nicht so weit in der Vergangenheit zurückliegen. Die Größe der Boundingbox wird hier zum einen durch die Objektparameter (z.B. Größe), zum Zeitpunkt der Erkennung beeinflusst, aber auch durch deren Unsicherheiten, möglichen Alternativen in der Objekttrajektorie, bekannten Sensorfehlern / Ungenauigkeiten sowie empirisch bestimmten Faktoren.

Im Programmschritt 344 wird die geschätzte Trajektorie für eine Rückwärtsrechnung verwendet, um eine Anzahl problematischer Bilder zu bestimmen, mit denen überprüft werden soll, warum das sich nähernde Fahrzeug 12 darin nicht erkannt werden konnte. Der Abstand zwischen Beobachterfahrzeug 10 und des sich nähernden Fahrzeuges 12 wird dabei auch berücksichtigt. Überschreitet der Abstand eine vorgegebene Grenze, brauchen keine weiteren zurückliegenden Bilder archiviert zu werden. Für die verschiedenen Umfeldbeobachtungssensoren sind jeweils die Distanzen bekannt, bis zu denen die gewünschten Objekte noch erkannt werden können. Dann wird das Programm mit Programmschritt 346 fortgesetzt. In Programmschritt 346 findet eine Berechnung der Anzahl problematischer Bilder statt.

Im Programmschritt 348 werden die jeweiligen Boundingboxen für die Anzahl problematischer Bilder berechnet. Auch dies erfolgt unter Berücksichtigung der geschätzten Trajektorie.

In einer anderen Variante wird in den Schritten 344 und / oder 346 ebenfalls ermittelt, ob eine Nichterkennung durch eine mögliche Überdeckung des relevanten Objekts durch andere, möglicherweise korrekt erkannte Objekte verursacht worden sein kann (andere Fahrzeuge, aus Navigationsdaten bekannte Häuser / Mauern / Lärmschutzwände, Bäume, Sträucher, Wälder). In diesem Fall werden die Bilder möglicherweise nicht übertragen. Der Zeitraum an problematischen Bildern kann dadurch begrenzt sein, dass die vermutete Objekttrajektorie nahelegt, dass das relevante Objekt zu einem früheren Zeitpunkt sich noch nicht im Bereich der Kamera befunden hat.

Im Programmschritt 348 erfolgt dann die Übertragung der problematischen Bildausschnitte 14 von dem Ringspeicher der Speichervorrichtung 60 zu dem Kommunikationsmodul 160 und das Kommunikationsmodul 160 sendet diese Bilddaten über Mobilfunk zum dem Backend-Server 320. Dort werden sie archiviert. Die archivierten Bilder werden später in dem Rechenzentrum von Experten ausgewertet oder maschinell mit künstlicher Intelligenz. Die Überprüfung hat den Zweck, mögliche Probleme des Bildauswertungssystems zu erkennen. Die Ergebnisse der Überprüfungen können zur Verbesserung der Auswertealgorithmen herangezogen werden. Im Idealfall kann der verbesserte Auswertealgorithmus per OTA Download (Over the Air) an das Fahrzeug 10 zurück übertragen werden und dort installiert werden. Es kann sich aber auch ergeben, dass mit der Überprüfung ein systematischer Fehler festgestellt wird, der auf einer Fehljustierung der Kamera 150 beruht. In dem Fall könnte eine Nachricht an das Fahrzeug 10 gesendet werden, um den Fahrer zu informieren, dass er die Werkstatt aufsuchen soll. Das Programm endet im Programmschritt 350.

Die Anzahl und Qualität der zu archivierenden Bilder kann von verschiedenen Faktoren beeinflusst werden. Neben den bereits vorgestellten Fällen werden insbesondere noch folgende Einflussfaktoren genannt:

### Wetterbedingungen

Bei widrigen Wetterbedingungen ist die Sicht stark eingeschränkt. Dies kann so weit gehen, dass gar keine Objekterkennung mehr möglich ist. Allerdings können hier die anderen Umgebungserfassungssensoren RADAR-Sensor und LIDAR-Sensor bessere Ergebnisse liefern. Jedenfalls kann vorgesehen werden, dass bei widrigen Wetterbedingungen die Anzahl der zu archivierenden Bilder oder Bildausschnitte eingeschränkt wird, weil die entsprechenden Objekte aus der Normerkennungsdistanz nicht erfassbar sind.

### Positionsgenauigkeit

Die Genauigkeit der Positionsermittlung basierend auf GNSS-Signalen und Odometrie-Signalen kann ebenfalls wetterabhängig sein. Sie kann aber auch von anderen Einflussfaktoren abhängen. Als Beispiel wird das Umfeld, in dem das Fahrzeug sich bewegt, genannt. In der Stadt kann durch starke Bebauung der Empfang der Satelliten-Signale eingeschränkt sein. Dies kann auch bei Überland-Fahrten der Fall sein. In Wäldern können die Satelliten-Signale abgeschwächt sein. Im Gebirge kann bedingt durch die Tektonik ebenfalls ein schlechter Empfang vorherrschen. In solchen Fällen wird deshalb vorgeschlagen, dass mehr Bilder oder Bildausschnitte aufgezeichnet werden. Dann ist es wahrscheinlicher, dass die relevanten Streckenabschnitte trotz der Positionsungenauigkeit mit aufgezeichnet wurden.

### Fahrbahnbeschaffenheit

Die Fahrbahnbeschaffenheit kann ebenfalls einen ähnlichen Einfluss haben. Auf Kopfsteinpflaster sind starke Erschütterungen vorhanden, so dass die aufgenommenen Bilder verwackelt sein können. Bei Glätte durch Eis, Schnee oder Regen wird von den Antriebschlupfregelungen eine Reibwertschätzung ermittelt. Wenn der Schlupf entsprechend groß ist, sind die Odometrie-Daten nicht mehr so verlässlich und es sollte dieser Einfluss wie bei dem Einfluss durch Positionsungenauigkeiten berücksichtigt werden.

### Uhrzeit

Ersichtlich wird die Bildqualität sehr stark mit der Tageszeit variieren. Hier sollte wenigstens zwischen Tag- und Nachtzeiten unterschieden werden. Zu Nachtzeiten sollten eher die Daten von RADAR- oder LIDAR-Sensoren aufgezeichnet werden als die Kamera-Bilddaten.

### Verkehrsbedingungen

Hier kann unterschieden werden, ob sich das Fahrzeug im Stadtverkehr, auf der Autobahn, auf der Landstraße usw. bewegt. Im Stadtverkehr kommt es auf besonders genaue Erfassung der Verkehrsschilder an. Hier kann die Anzahl der aufzuzeichnenden Bilder erhöht werden. Im Stau auf der Autobahn kann die Anzahl der aufzuzeichnenden Bilder hingegen reduziert werden.

Im Fahrzeug 10 erfolgt die Zwischenspeicherung der zu archivierenden Bilder oder Bildausschnitte 14. Dazu kann der Speicher 60 eingesetzt werden. Bei der praktischen Implementierung wird in dem Speicher 60 ein Ringspeicher eingerichtet. Dieser wird so verwaltet, dass die neu aufgenommenen Bilder hintereinander in den freien Speicherbereich des Ringspeichers geschrieben werden. Wenn das Ende des freien Speicherbereiches erreicht ist, wird der bereits beschriebene Teil des Ringspeichers überschrieben. Durch die Verwaltung des allokierten Speicherbereiches als Ringspeicher wird immer der älteste Teil des Speichers überschrieben. Die Bilder oder Bildausschnitte 14 können unkomprimiert oder komprimiert abgespeichert werden. Allerdings ist es empfehlenswert, ein verlustfreies Komprimierungsverfahren einzusetzen, damit nicht irgendein relevanter Bildinhalt verloren gehen kann. Als Beispiel eines verlustfreien Kompressionsverfahrens wird der FFmpeg-Codec genannt. Die Bilddaten werden in einem entsprechenden Dateiformat abgespeichert. Hier kommen verschiedene Daten-Container-Formate in Frage. Als Beispiel werden genannt das ADTF Format, das für den Fahrzeugbereich entwickelt wurde, und das TIFF-Format. Andere Container-Formate für die Abspeicherung von Bild- und Tondaten sind MPEG, Ogg, Audio Video Interleave, DIVX, Quicktime, Matroska etc. Werden die Bilder während der Fahrt zum Backend-Server 320 übertragen, kann es ausreichend sein, den Ringspeicher für 20 s Aufzeichnungsdauer auszulegen. Es kann auch ein separater Speicher im Fahrzeug vorgesehen werden, auf dem die Bilder archiviert werden. Hier bietet sich z.B. eine USB-Festplatte an, die abgenommen werden kann, um sie mit einem Rechner zu verbinden, der zum Auswerten der archivierten Bilder eingesetzt wird.

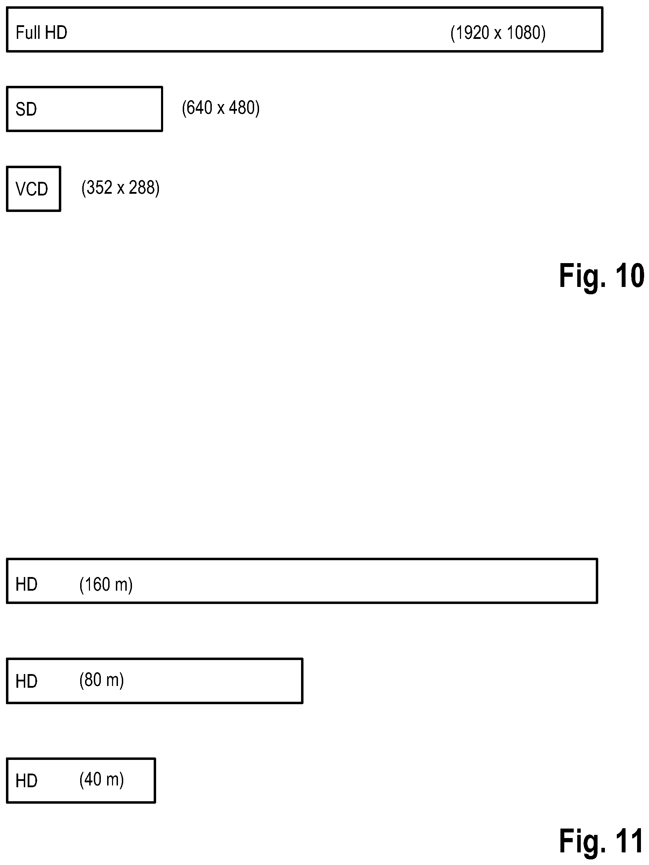

Fig. 10 zeigt noch den Effekt, wie durch die Reduktion der Bildqualität die zu archivierende Menge an Daten verringert werden kann. Von oben nach unten wird die Menge an Bilddaten für die verschiedenen Bildqualitäten Full HD mit einer Auflösung von 1920 X 1080 Bildpunkten, SD mit einer Auflösung von 640 X 480 Bildpunkten und VCD mit einer Auflösung von 352 X 288 Bildpunkten dargestellt.

Die Fig. 11 zeigt dann noch den Effekt der Variation der Anzahl der Bilder oder Bildteile 17 in Abhängigkeit von der Positionsgenauigkeit oder den Wetterbedingungen etc. Wird die Aufzeichnungsdauer wegen Positionsungenauigkeit auf 160 m Distanz erhöht, fallen dementsprechend doppelt so viele Daten zur Archivierung an. Bei Reduktion auf 40 m Distanz dementsprechend nur halb so viele.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können. Das in den Patentansprüchen genannte Objekt kann ausdrücklich auch eine Person sein.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe / Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Die Erfindung wird in den Ausführungsbeispielen am Beispiel des Einsatzes in Fahrzeugen genauer erläutert. Hier wird auch auf die Einsatzmöglichkeit bei Flugzeugen und Helikoptern zum Beispiel bei Landemanövern oder Sucheinsätzen etc. hingewiesen.

Auch bei ferngesteuerten Geräten wie Drohnen und Robotern, bei denen es sehr stark auf Bildauswertung ankommt, kann die Erfindung eingesetzt werden. Andere Einsatzmöglichkeiten betreffen ein Smartphone, ein Tablet Computer, ein Personal Assistant oder eine Daten-Brille.

### Bezugszeichenliste

- 10: Beobachter-Fahrzeug
- 12: sich näherndes Fahrzeug
- 13: vorausfahrendes Fahrzeug
- 14: erster relevanter Bildausschnitt
- 15: Verkehrsschild
- 17: zweiter relevanter Bildausschnitt
- 20: Head-Up Display
- 30: berührungsempfindliche Anzeigeeinheit
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: Datenbus
- 110: Kombiinstrument
- 120: Telefon
- 130: Navigationsgerät
- 140: Radio
- 142: Gateway
- 144: On-Board-Diagnoseschnittstelle
- 150: Kamera
- 160: Kommunikationsmodul
- 170: Fahrzeug-Messeinheit
- 171: Sensor 1
- 172: Sensor 2
- 173: Sensor 3
- 180: Steuereinheit für automatische Fahrfunktion
- 181: Motorsteuergerät
- 182: ESP-Steuergerät
- 183: Getriebesteuergerät
- 200: Evolved Packet Core
- 210: Basisstation
- 300: Internet
- 310: Road Side Unit
- 320: Backend-Server
- 330-336: verschiedene Programmschritte eines ersten Computerprogramms
- 340-350: verschiedene Programmschritte eines zweiten Computerprogramms
- Uu: Luftschnittstelle für Kommunikation UE und eNodeB
- PC5: Luftschnittstelle für Fahrzeugdirektkommunikation

## Patentansprüche

1. Verfahren zur Erfassung von Bildmaterial zur Überprüfung von bildauswertenden Systemen, mit den Schritten:
- Aufzeichnen von Bildern, die von einer Bilderzeugungseinrichtung eines Fahrzeugs erfasst werden, in einem Speicher (60); und
- Durchführen einer Objekterkennung durch ein bildauswertendes System; **gekennzeichnet durch**:
- Bestimmen einer Distanz zwischen dem Fahrzeug und einem Objekt (12, 15), in der das Objekt (12, 15) erstmalig korrekt erkannt wurde;
- Feststellen, dass die bestimmte Distanz jenseits einer Toleranzgrenze von einer Normerkennungsdistanz für die Objekterkennung abweicht;
- Ermitteln derjenigen Bilder oder Bildausschnitte (14, 17), die zwischen der bestimmten Distanz und der Normerkennungsdistanz aufgenommen wurden; und
- Archivieren der ermittelten Bilder oder Bildausschnitte (14, 17).

2. Verfahren nach Anspruch 1, wobei der Schritt des Ermittelns von Bildern oder Bildausschnitten (14) für das Archivieren beinhaltet, dass eine Trajektorie eines sich bewegenden Objektes (12) berechnet wird und in Abhängigkeit von der berechneten Trajektorie eine Bestimmung der zu archivierenden Bilder oder Bildausschnitte (14) vorgenommen wird.

3. Verfahren nach Anspruch 2, wobei mit Hilfe der Trajektorie eine Anzahl von Bildern oder Bildausschnitten (14) bestimmt wird, in denen das sich bewegende Objekt (12) mutmaßlich sichtbar war.

4. Verfahren nach einem der vorhergehenden Ansprüche, wobei das bildauswertende System ein bildauswertendes System für ein Fahrzeug (10) ist und wobei zum Bestimmen der Distanz die Positionsdaten des Fahrzeuges (10) und die Positionsdaten des erkannten Objektes (12, 15) ausgewertet werden.

5. Verfahren nach einem der vorhergehenden Ansprüche, wobei die zu archivierenden Bilder oder Bildausschnitte (14, 17) an eine externe Archivierungsstelle (320) gesendet werden oder in einer lokalen Speichereinheit (60) archiviert werden.

6. Verfahren nach einem der vorhergehenden Ansprüche, wobei die ermittelten Bilder oder Bildausschnitte (14, 17) mit hoher Qualität archiviert werden und weitere Bilder oder anderen Bildausschnitte mit einer geringeren Qualität archiviert werden.

7. Vorrichtung zur Erfassung von Bildmaterial zur Überprüfung von bildauswertenden Systemen, aufweisend eine Bilderzeugungseinrichtung, eine Recheneinrichtung (40) und eine Speichereinrichtung (60), wobei die Speichereinrichtung (60) ausgelegt ist, von der Bilderzeugungseinrichtung gelieferte Bilder aufzuzeichnen und die Recheneinrichtung (40) ausgelegt ist, eine Objekterkennung bei den von der Bilderzeugungseinrichtung gelieferten Bildern durchzuführen, **dadurch gekennzeichnet, dass** die Recheneinrichtung (40) weiterhin ausgelegt ist:
- eine Distanz zu bestimmen, in der ein Objekt (12, 15) erstmalig korrekt erkannt wurde;
- Festzustellen, dass die bestimmte Distanz jenseits einer Toleranzgrenze von einer Normerkennungsdistanz für die Objekterkennung abweicht;
- diejenigen Bilder oder Bildausschnitte (14, 17) zu ermitteln, die zwischen der bestimmten Distanz und der Normerkennungsdistanz aufgenommen wurden; und
- einen Befehl zum Archivieren der ermittelten Bilder oder Bildausschnitte (14, 17) zu geben.

8. Vorrichtung nach Anspruch 7, wobei die Recheneinrichtung (40) ausgelegt ist, eine Trajektorie eines sich bewegenden Objektes (12) zu berechnen und in Abhängigkeit von der berechneten Trajektorie eine Bestimmung der zu archivierenden Bilder oder Bildausschnitte (14) vorzunehmen.

9. Vorrichtung nach Anspruch 7 oder 8, wobei die Vorrichtung ein Kommunikationsmodul (160) aufweist und das Kommunikationsmodul (160) ausgelegt ist, die ermittelten Bilder oder Bildausschnitte (14, 17) nach Erhalt des Befehls zum Archivieren der ermittelten Bilder oder Bildausschnitte (14, 17) zu einer externen Archivierungsstelle (320) zu senden.

10. Vorrichtung nach einem der Ansprüche 7 bis 9, wobei die Speichereinrichtung (60) als Ringspeicher ausgebildet ist, bei dem bei Speicherüberlauf die ältesten zuvor gespeicherten Bilder oder Bildteile (14, 17) von den neuen Bildern oder Bildteilen (14, 17) überschrieben werden.

11. Vorrichtung nach einem der Ansprüche 7 bis 10, wobei die Bilderzeugungseinrichtung eine Videokamera (150) oder ein LIDAR- oder ein RADAR-Sensor ist und wobei das Kommunikationsmodul (160) für die drahtlose Kommunikation nach wenigstens einem der Kommunikationssysteme WLAN entsprechend eines Standards der IEEE 802.11 Standard-Familie oder einem LTE oder 5G Mobilfunkkommunikationssystem entsprechend eines 3GPP Standards ausgelegt ist.

12. Fahrzeug (10), **dadurch gekennzeichnet, dass** das Fahrzeug (10) mit einer Vorrichtung nach einem der Ansprüche 7 bis 11 ausgestattet ist.

13. Computerprogramm, **dadurch gekennzeichnet, dass** das Computerprogramm ausgelegt ist, bei Abarbeitung in einer Recheneinrichtung (40) die Schritte des Verfahrens nach einem der Ansprüche 1 bis 6 durchzuführen.

## Claims

1. Method for capturing image material for checking image analysis systems, comprising the following steps:
- recording, in a memory (60), images captured by an image generating device of a vehicle; and
- performing object recognition using an image analysis system; **characterized by**:
- determining a distance between the vehicle and an object (12, 15) at which the object (12, 15) was first correctly detected;
- establishing that the determined distance deviates from a standard recognition distance for object recognition beyond a tolerance limit;
- ascertaining the images or image details (14, 17) that were captured between the determined distance and the standard recognition distance; and
- archiving the ascertained images or image details (14, 17).

2. Method according to claim 1, wherein the step of ascertaining images or image details (14) for archiving includes calculating a trajectory of a moving object (12) and determining the images or image details (14) to be archived on the basis of the calculated trajectory.

3. Method according to claim 2, wherein a number of images or image details (14) in which the moving object (12) was presumably visible are determined using the trajectory.

4. Method according to any of the preceding claims, wherein the image analysis system is an image analysis system for a vehicle (10) and wherein the position data of the vehicle (10) and the position data of the recognized object (12, 15) are analyzed in order to determine the distance.

5. Method according to any of the preceding claims, wherein the images or image details (14, 17) to be archived are sent to an external archiving location (320) or are archived in a local memory unit (60).

6. Method according to any of the preceding claims, wherein the ascertained images or image details (14, 17) are archived with high quality and further images or other image details are archived with lower quality.

7. Apparatus for capturing image material for checking image analysis systems, comprising an image generating device, a computing device (40) and a memory device (60), the memory device (60) being designed to record images supplied by the image generating device and the computing device (40) being designed to perform object recognition on the images supplied by the image generating device, **characterized in that** the computing device (40) is furthermore designed:
- to determine a distance at which an object (12, 15) was first correctly detected;
- to establish that the determined distance deviates from a standard recognition distance for object recognition beyond a tolerance limit;
- to ascertain the images or image details (14, 17) that were captured between the determined distance and the standard recognition distance; and
- to issue a command to archive the ascertained images or image details (14, 17).

8. Apparatus according to claim 7, wherein the computing device (40) is designed to calculate a trajectory of a moving object (12) and, depending on the calculated trajectory, to determine the images or image details (14) to be archived.

9. Apparatus according to claim 7 or 8, wherein the apparatus comprises a communication module (160) and the communication module (160) is designed to send the ascertained images or image details (14, 17) to an external archiving location (320) after receiving the command to archive the ascertained images or image details (14, 17).

10. Apparatus according to any of claims 7 to 9, wherein the memory device (60) is designed as a circular buffer in which, in the event of a buffer overflow, the oldest previously stored images or image parts (14, 17) are overwritten by the new images or image parts (14, 17).

11. Apparatus according to any of claims 7 to 10, wherein the image generating device is a video camera (150) or a LIDAR or a RADAR sensor and wherein the communication module (160) is designed for wireless communication according to at least one of the communication systems WLAN in accordance with a standard of the IEEE 802.11 standard family or an LTE or 5G mobile communication system in accordance with a 3GPP standard.

12. Vehicle (10), **characterized in that** the vehicle (10) is equipped with an apparatus according to any of claims 7 to 11.

13. Computer program, **characterized in that** the computer program is designed to perform the steps of the method according to any of claims 1 to 6 when processed in a computing device (40).

## Revendications

1. Procédé pour la détection de matériau d'images pour la vérification de systèmes d'évaluation d'images, comportant les étapes consistant à :
- enregistrer des images détectées par un appareil de génération d'images d'un véhicule dans une mémoire (60) ; et
- réaliser une détection d'objet par un système d'évaluation d'images ; **caractérisé par** :
- la détermination d'une distance entre le véhicule et un objet (12, 15) à laquelle l'objet (12, 15) a été correctement détecté pour la première fois ;
- le fait de constater que la distance déterminée s'écarte, au-delà d'un seuil de tolérance, d'une distance de détection normalisée pour la détection d'objet ;
- la définition des images ou des parties d'images (14, 17) qui ont été prises entre la distance déterminée et la distance de détection normalisée ; et
- l'archivage des images ou parties d'images (14, 17) définies.

2. Procédé selon la revendication 1, dans lequel l'étape de définition d'images ou de parties d'images (14) pour l'archivage comprend le calcul d'une trajectoire d'un objet (12) en mouvement et, en fonction de la trajectoire calculée, l'exécution d'une détermination des images ou parties d'images (14) à archiver.

3. Procédé selon la revendication 2, dans lequel est déterminé à l'aide de la trajectoire un nombre d'images ou de parties d'images (14) dans lesquelles l'objet (12) en mouvement était présumé visible.

4. Procédé selon l'une des revendications précédentes, dans lequel le système d'évaluation d'images est un système d'évaluation d'images pour un véhicule (10) et dans lequel, pour la détermination de la distance, les données de position du véhicule (10) et les données de position de l'objet (12, 15) détecté sont évaluées.

5. Procédé selon l'une des revendications précédentes, dans lequel les images ou parties d'images (14, 17) à archiver sont envoyées vers un emplacement d'archivage externe (320) ou sont archivées dans une unité de mémorisation locale (60).

6. Procédé selon l'une des revendications précédentes, dans lequel les images ou parties d'images (14, 17) définies sont archivées avec une qualité élevée et d'autres images ou d'autres parties d'images sont archivées avec une qualité inférieure.

7. Dispositif pour la détection de matériau d'images pour la vérification de systèmes d'évaluation d'images, présentant un appareil de génération d'images, un appareil de calcul (40) et un appareil de mémorisation (60), dans lequel l'appareil de mémorisation (60) est configuré pour enregistrer des images fournies par l'appareil de génération d'images et l'appareil de calcul (40) est configuré pour réaliser une détection d'objet sur les images fournies par l'appareil de génération d'images, **caractérisé en ce que** l'appareil de calcul (40) est en outre configuré pour :
- déterminer une distance à laquelle un objet (12, 15) a été correctement détecté pour la première fois ;
- constater que la distance déterminée s'écarte, au-delà d'un seuil de tolérance, d'une distance de détection normalisée pour la détection d'objet ;
- définir les images ou parties d'images (14, 17) qui ont été prises entre la distance déterminée et la distance de détection normalisée ; et
- donner une instruction d'archivage des images ou parties d'images (14, 17) définies.

8. Dispositif selon la revendication 7, dans lequel l'appareil de calcul (40) est configuré pour calculer une trajectoire d'un objet (12) en mouvement et pour exécuter une détermination des images ou parties d'images (14) à archiver en fonction de la trajectoire calculée.

9. Dispositif selon la revendication 7 ou 8, dans lequel le dispositif présente un module de communication (160) et le module de communication (160) est configuré pour envoyer les images ou parties d'images (14, 17) définies à un emplacement d'archivage externe (320) après réception de l'instruction d'archivage des images ou parties d'images (14, 17) définies.

10. Dispositif selon l'une des revendications 7 à 9, dans lequel l'appareil de mémorisation (60) est conçu sous la forme d'une mémoire circulaire dans laquelle, en cas de débordement de mémoire, les images ou parties d'images (14, 17) les plus anciennes précédemment mémorisées sont écrasées par les nouvelles images ou parties d'images (14, 17).

11. Dispositif selon l'une des revendications 7 à 10, dans lequel l'appareil de génération d'images est une caméra vidéo (150) ou un capteur LIDAR ou un capteur RADAR, et dans lequel le module de communication (160) est configuré pour une communication sans fil selon au moins l'un des systèmes de communication WLAN correspondant à une norme de la famille de normes IEEE 802.11 ou un système de communication mobile LTE ou 5G correspondant à une norme 3GPP.

12. Véhicule (10), **caractérisé en ce que** le véhicule (10) est équipé d'un dispositif selon l'une des revendications 7 à 11.

13. Programme informatique, **caractérisé en ce que** le programme informatique est configuré pour réaliser, lors de son exécution dans un appareil de calcul (40), les étapes du procédé selon l'une des revendications 1 à 6.
